(19)

Europäisches Patentamt
European Patent Office
Office européen des brevets

(11) **EP 3 654 645 A1**

(12) **EUROPEAN PATENT APPLICATION**

(43) Date of publication:
20.05.2020 Bulletin 2020/21

(51) Int Cl.:
*H04N 19/11* (2014.01)    *H04N 19/186* (2014.01)
*H04N 19/176* (2014.01)

(21) Application number: **18306500.2**

(22) Date of filing: **15.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **RACAPE, Fabien**
  **35576 Cesson-Sévigné Cedex (FR)**
• **RATH, Gagan**
  **35576 Cesson-Sévigné Cedex (FR)**
• **URBAN, Fabrice**
  **35576 Cesson-Sévigné Cedex (FR)**

(74) Representative: **Huchet, Anne**
**InterDigital CE Patent Holdings**
**20, rue Rouget de Lisle**
**92130 Issy-les-Moulineaux (FR)**

(54) **METHOD AND DEVICE FOR PICTURE ENCODING AND DECODING**

(57)    A decoding method is disclosed. An intra prediction mode is selected in a candidate set of prediction modes. A chroma block is then decoded responsive to the selected intra prediction mode.

The candidate set of prediction modes is obtained by, first, obtaining a first intra prediction mode of a luma block co-located with the chroma block. Then, the first intra prediction mode is included in the candidate set of prediction modes. In the case where the first intra prediction mode is angular, at least one intra prediction mode whose angular direction is close to a current angular direction of the first intra prediction mode is further included in the candidate set.

**Figure 4**

**Description**

1. TECHNICAL FIELD

At least one of the present embodiments generally relates to a method and a device for picture encoding and decoding, and more particularly, to a method and a device for picture encoding and decoding with intra prediction.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors, prediction residuals or predictor, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

3. BRIEF SUMMARY

According to a general aspect of at least one embodiment, a method for decoding is presented, comprising:

selecting an intra prediction mode in a candidate set of prediction modes;
decoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, an apparatus for decoding is presented, comprising one or more processor(s) configured to perform:

selecting an intra prediction mode in a candidate set of prediction modes;
decoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, a method for encoding is presented, comprising:

selecting an intra prediction mode in a candidate set of prediction modes;
encoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, an apparatus for encoding is presented, comprising one or more processor(s) configured to perform:

selecting an intra prediction mode in a candidate set of prediction modes;
encoding a chroma block responsive to the selected intra prediction mode;

wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to another general aspect of at least one embodiment, a bitstream is formatted to include signal generated according to the encoding methods described above.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

4. BRIEF SUMMARY OF THE DRAWINGS

Figure 1 depicts 65 angular directions for intra prediction;
Figure 2 illustrates the principle of dual tree partitioning;
Figure 3 depicts examples of various locations for deriving a derived mode (DM) mode;
Figure 4 depicts a flowchart of a decoding method according to an embodiment;
Figure 5 depicts a flowchart of an encoding method according to an embodiment;
Figures 6 and 7 depict flowcharts of methods for obtaining a set of candidate intra prediction modes for a current chroma block according to various embodiments;
Figure 8;

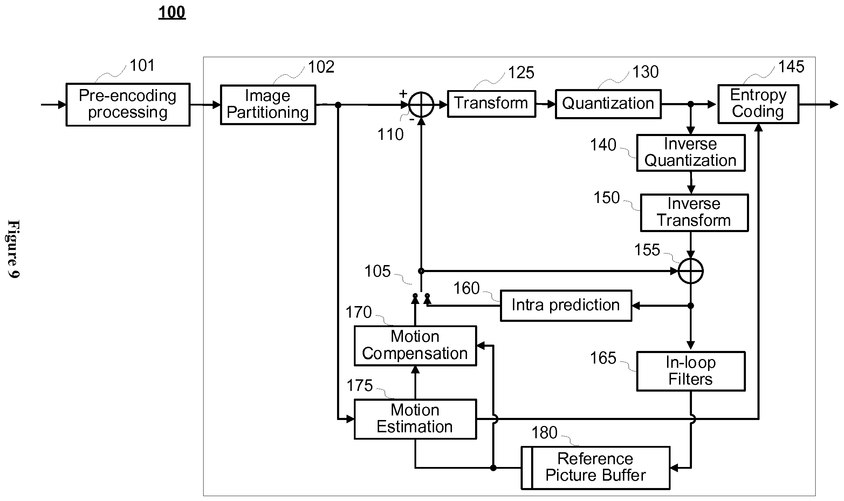

Figure 9 depicts an encoder according to an embodiment;

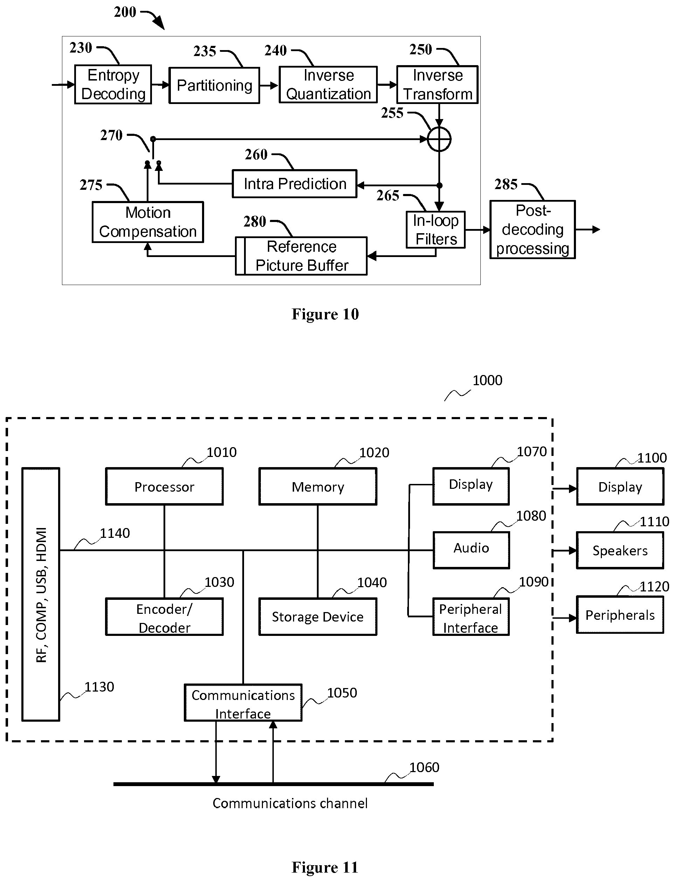

Figure 10 depicts a decoder according to an embodiment; and
Figure 11 illustrates a block diagram of an example of a system in which various aspects and embodiments are implemented.

5. DETAILED DESCRIPTION

In HEVC coding, a picture is partitioned into CTUs of square shape with a configurable size typically 64x64. The size may be 128x128, or 256x256 in other video coding standards. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems such as VVC (Versatile Video Coding), a CTU is the root of a coding tree partitioning into Coding Units (CU). A coding tree is a tree in which a parent node (usually corresponding to a block) can be split into child nodes (e.g. into 2, 3 or 4 child nodes), each of which may become parent node for another split into child nodes. In addition to the quad-tree split mode, new split modes (e.g. binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a block that may be further split into smaller blocks also named sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure.

In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes. A target block or a current is a block to be processed, i.e. encoded or decoded.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Intra prediction in video compression refers to the spatial prediction of a current block of pixels using information from causal neighboring blocks, i.e. neighboring blocks in the same frame which have already been decoded. This powerful coding tool allows for high compression efficiency in INTRA frames, as well as in INTER frames whenever there is no better temporal prediction. Therefore, intra prediction has been included as a core coding tool in all video compression standards including H.264/AVC, HEVC, VVC, etc.

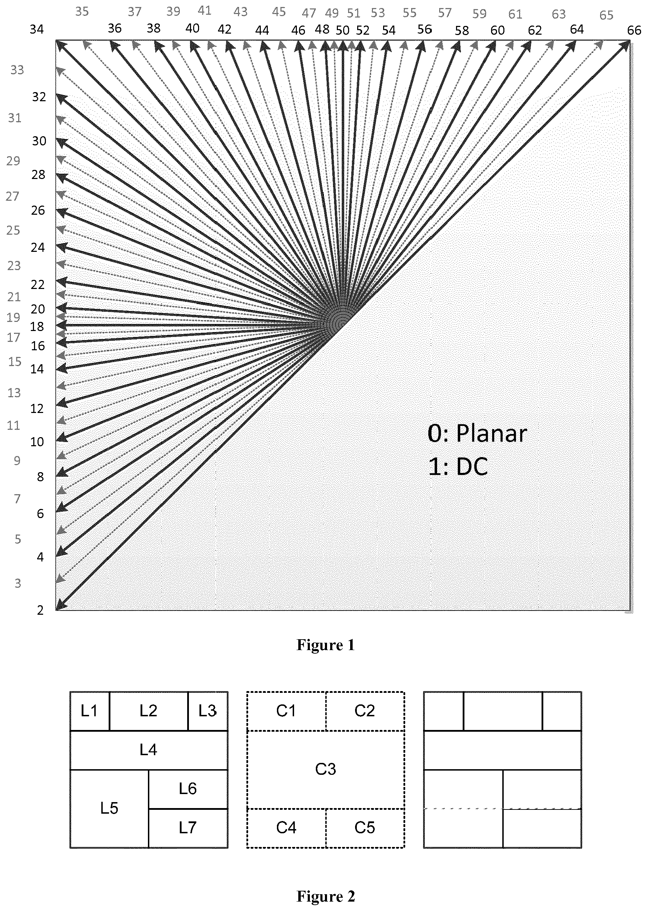

To capture the spatial correlation, intra prediction in HEVC and VVC use several prediction modes. HEVC specifies 35 prediction modes, out of which one is a PLANAR mode (indexed as mode 0), one is a DC mode (indexed as mode 1) and the remaining 33 (indexed as mode 2-34) are angular modes. The angular modes aim to model the directional structures of objects in a frame, whereas the PLANAR and DC modes aim to model the slow and gradually changing intensity regions. In VVC, the number of angular modes has been increased to 65 resulting in 67 prediction modes in total. The modes 2 to 66 are angular modes as depicted on **Figure 1.** The higher number of prediction modes aim to capture object directionalities at finer angles that might result from specified larger block sizes.

The blocks of the two chroma components (Cb and Cr) usually contain less details than the luma blocks. Furthermore, the content of the chroma blocks is correlated to the content of the luma block in the sense of object directionalities. Therefore, the intra prediction of the chroma blocks may be simplified with respect to the intra prediction of the luma blocks. Instead of checking all possible prediction modes (35 in HEVC, 67 in VVC) by RD optimization process at the encoder, as is done for luma blocks, only a few modes (referred to as candidate modes) which are more likely are checked.

In HEVC, only 5 candidate prediction modes are tested for a chroma target block. One prediction mode is the intra prediction mode of the co-located luma block (called the derived mode). The remaining four prediction modes are PLANAR, DC, VER_IDX (mode 26), and HOR_IDX (mode 10). If the derived mode equals one of the four default modes, then the vertical diagonal mode VDIA_IDX (mode 34) is used in place of that mode. Table 1 lists the values of the candidate modes for different values of the derived mode (DM).

Table 1: Chroma prediction modes in HEVC. chroma_mode[i] indicates the (i+1)th mode.

| Chroma prediction modes | DM = PLANAR_IDX | DM=VER_IDX | DM=HOR_IDX | DM=DC_IDX | DM = Angular (except HOR_IDX and VER_IDX) |
|---|---|---|---|---|---|
| chroma_mode[0] | VDIA_IDX | PLANAR_IDX | PLANAR_IDX | PLANAR_IDX | PLANAR_IDX |
| chroma_mode[1] | VER_IDX | VDIA_IDX | VER_IDX | VER_IDX | VER_IDX |
| chroma mode[2] | HOR_IDX | HOR_IDX | VDIA_IDX | HOR_IDX | HOR_IDX |
| chroma_mode[3] | DC_IDX | DC_IDX | DC_IDX | VDIA_IDX | DC_IDX |
| chroma_mode[4] | DM | DM | DM | DM | DM |

On the encoder side, all chroma target blocks are tested with the five candidate prediction modes for best RD performance. The prediction mode giving the best rate-distortion (RD) performance is signaled with a variable length code (VLC) using the following mode coding scheme:

Table 2: Chroma mode coding in HEVC

| Chroma intra prediction mode | Binarization |
|---|---|
| DM (chroma_mode[4]) | 0 |
| chroma_mode[0] | 100 |
| chroma_mode[1] | 101 |
| chroma_mode[2] | 110 |
| chroma_mode[3] | 111 |

The above encoding method is simple. It uses the experimental fact that the DM mode has the highest probability of occurrence. The four default modes are assumed to have equal probabilities.

On the decoder side, the same list of candidate prediction modes is obtained. A prediction mode (the one selected on the encoder side) is decoded from the bitstream using the list of candidate prediction modes.

In VVC, 6 candidate prediction modes are tested for a chroma target block. In addition to the 5 modes mentioned for HEVC (DM, PLANAR, DC, VER_IDX and HOR_IDX), a CCLM mode (CCLM stands for Cross Component Linear Model) is added as another candidate. In VVC, the PLANAR is mode 0, DC is mode 1, VER_IDX is mode 50 and HOR_IDX is mode 18. The derived mode is also called the direct mode or the DM mode in VVC. If the DM mode is equal to one of the default modes, then that default mode is substituted with the vertical diagonal mode VDIA_IDX (mode 66). The CCLM mode is also called LM mode. According to the LM mode, the prediction of the target chroma block is directly derived from the co-located reconstructed luma block instead of constructing it based on the reference arrays on the top and the left of the target block. A linear prediction model between the luma and the chroma samples is defined as follows:

$$pred_C(i,j) = \alpha \cdot rec_L{}'(i,j) + \beta$$

where $pred_C(i,j)$ represents the predicted chroma samples in a CU and $rec_L{}'^{(i,j)}$ represents the down-sampled reconstructed luma samples of the same CU. The reconstructed luma (down-sampled) and chroma samples from the top and left neighboring blocks are used to derive the parameters ($\alpha$ and $\beta$) of the model by minimizing a regression error. This regression error minimization computation may be performed as part of the decoding process, and not just as an encoder search operation so that no syntax is used to convey the $\alpha$ and $\beta$ values. The parameters are then used to derive the chroma sample prediction of the current CU from the reconstructed luma samples of the current CU.

Table 3 lists the values of the candidate modes for different values of the DM mode.

Table 3: Chroma prediction modes in VTM 2.0.1. of VVC (VTM stands for Versatile Test Model).

| Chroma prediction modes | DM = PLANAR_IDX | DM=VER_IDX | DM=HOR_IDX | DM=DC_IDX | DM = Angular (except HOR_IDX and VER_IDX) |
|---|---|---|---|---|---|
| chroma_mode[0] | VDIA_IDX | PLANAR_IDX | PLANAR_IDX | PLANAR_IDX | PLANAR_IDX |
| chroma_mode[1] | VER_IDX | VDIA_IDX | VER_IDX | VER_IDX | VER_IDX |
| chroma_mode[2] | HOR_IDX | HOR_IDX | VDIA_IDX | HOR_IDX | HOR_IDX |
| chroma_mode[3] | DC_IDX | DC_IDX | DC_IDX | VDIA_IDX | DC_IDX |
| chroma_mode[4] | LM | LM | LM | LM | LM |
| chroma_mode[5] | DM | DM | DM | DM | DM |

On the encoder side, all chroma target blocks are tested with the six candidate prediction modes for best RD performance. The prediction mode giving the best rate-distortion (RD) performance is signaled with a variable length code (VLC) using the following mode coding scheme:

Table 4 Chroma mode coding in VTM 2.0.1 of VVC.

| Chroma intra prediction mode | Binarization |
|---|---|
| DM (chroma_mode[5]) | 0 |
| LM (chroma_mode[4] | 10 |
| chroma_mode[0] | 1100 |
| chroma_mode[1] | 1101 |
| chroma_mode[2] | 1110 |
| chroma_mode[3] | 1111 |

The derived mode DM is still given the highest probability of occurrence by assigning only one bit to it. The LM mode is given higher preference than the four default modes. That is why the LM mode is encoded on only 2 bits while the four default modes are encoded on 4 bits. Furthermore, the default modes are assumed to have equal probabilities, as in HEVC.

The advantages of limiting the number of candidate modes to 5 (HEVC) or 6 (VVC) are fast RD optimization at the encoder and fewer signaling bits for mode coding. Since the DM mode has experimentally the highest probability of occurrence compared to the other prediction modes, it is signaled using only one bit.

The above candidate list selection (either for HEVC or VVC) implicitly assumes that the prediction mode of the co-located luma block, i.e., the DM mode, is accurate. However, because of various causes, such as lack of exact angularity, resolution, object intensity variation, the DM mode could be an approximate estimate. Therefore, the usage of the mentioned four default modes besides the DM and LM modes may become less efficient. The prediction efficiency can be improved by including adjacent modes of the DM mode in the candidate list in the case where the DM mode is angular. At least one embodiment thus proposes to improve the chroma prediction by adaptively changing the four default modes by using the adjacent or neighbor modes of the DM mode. Neighbors modes of the DM mode are defined as prediction mode whose angular direction is close to the angular direction of the DM mode.

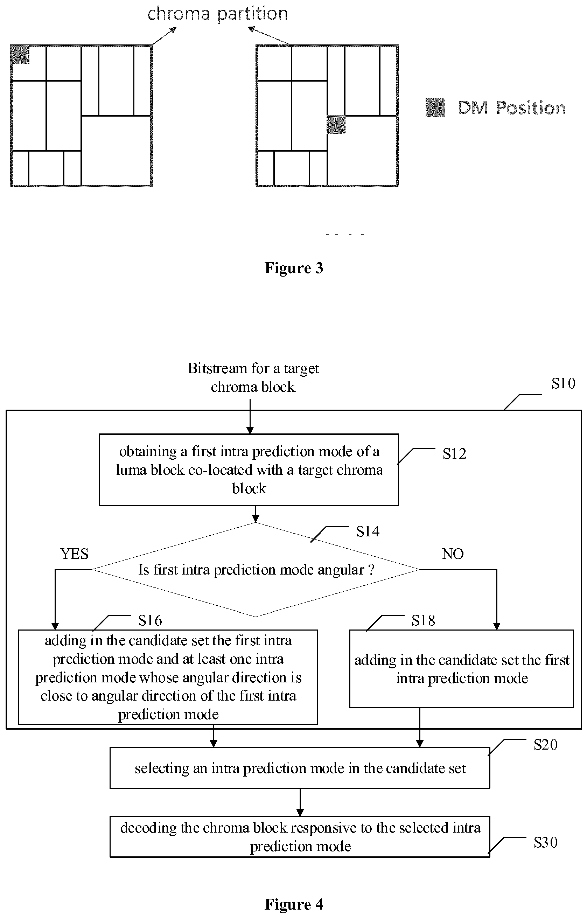

Figure 2 illustrates the principle of dual partition tree with luma blocks (L1 to L7) on the left, and corresponding chroma blocks (C1 to C5) in the middle. Dual coding tree refers to splitting of a picture into coding blocks that may be different for luma and chroma. In such a case, a chroma block may have several spatially corresponding luma blocks instead of a single one. In the case where a luma CTU and a chroma CTU have the same size, a corresponding luma block (e.g. a group of CUs) or corresponding luma blocks are blocks that spatially correspond to the same portion of the picture, i.e. that are co-located. Said otherwise, when the luma CTU is superposed to the chroma CTU, the luma block(s) that intersect the chroma block are the corresponding luma blocks. In the case where, the format is 4:2:0, the chroma signal is downscaled with respect to the luma signal. The spatial correspondence between luma blocks and chroma blocks takes into account this downscaling. Since VVC supports dual partition tree, namely in All Intra (AI) configuration, a chroma target block can be associated with multiple luma blocks which are located around the same location as the chroma block. Therefore, the DM mode can obatined from the prediction mode of the luma block co-located with the center position of the chroma block or co-located with the top-left position of the chroma block (as shown in Figure 3). These are only examples and other co-loctaed luma blocks may be used to derive the DM mode.

Therefore, in case the DM mode is not angular, other co-located luma blocks can be checked for angular modes and included in the candidate list. At least one embodiment thus proposes to further improve the chroma prediction (e.g. in All Intra configuration) by considering the intra prediction mode of another co-located luma CU (second DM mode) in constructing the candidate list.

Figure 4 depicts a flowchart of a decoding method according to one embodiment.

At S10, a candidate set of prediction modes is obtained. To this aim, a first intra prediction mode of a luma block co-located with a target chroma block is obtained at S12 (e.g. from the prediction mode of the luma block co-located with the center position of the chroma block or co-located with the top-left position of the chroma block). In the case where the first intra prediction mode is angular (S14), then the method continues at S16. Otherwise, the method continues at S18. At S16, the first intra prediction mode and at least one intra prediction mode whose angular direction is close to angular direction of the first intra prediction mode are included into the candidate set. As an example, the two intra prediction modes whose angular direction are the closest to the angular direction of the first intra prediction mode are included. For example, with respect to figure 1, the intra prediction modes indexed 51 and 53 are the closest to the mode indexed 52. Closest is defined with respect to the angular direction. At set S18, the first intra prediction mode is included into the candidate set. Additional intra prediction modes can be added among the LM mode and the default modes (DC, PLANAR, HOR, VER). At S20, an intra prediction is selected in the candidate set. To this aim, an index is decoded from the bitstream. The intra prediction mode in the candidate set identified by the decoded index is then used (S30) to decode the chroma block.

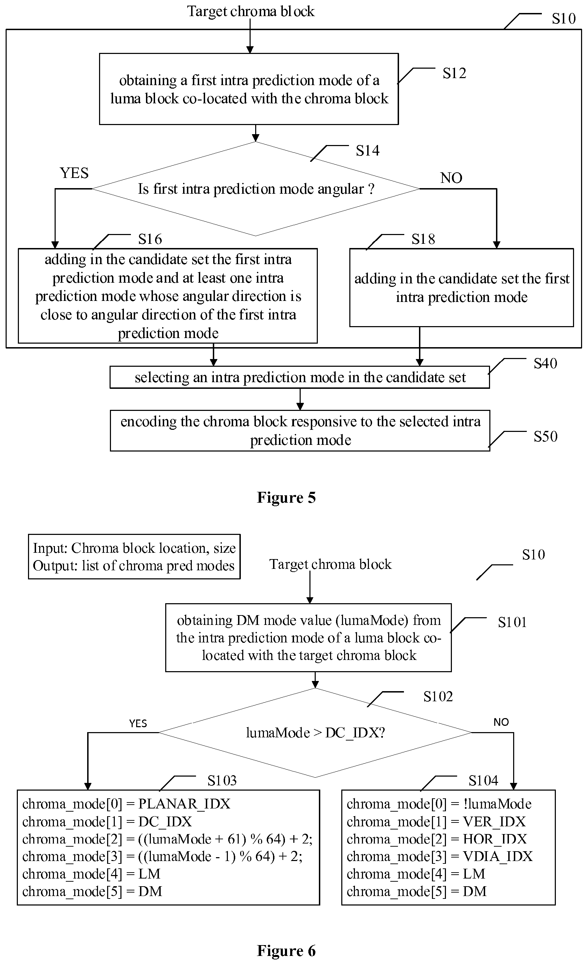

Figure 5 depicts a flowchart of an encoding method according to one embodiment.

The steps identical to the steps of the decoding method are identified with the same numerical references. The encoding method comprises the steps S12-S18. At S40, an intra prediction mode is selected in the candidate set for example using RD optimization. At S50, the chroma block is encoded using the selected intra prediction mode. The index of the selected intra prediction mode is for example encoded with either Table 4 or Table 5.

Figure 6 depicts a flowchart of a method for obtaining a set/list of candidate intra prediction modes for a current chroma block according to one embodiment.

At step S101, a DM mode is determined for the current chroma block from the intra prediction mode associated with a co-located luma block. The DM mode may be the intra prediction mode associated with the luma block co-located with the center sample or with the top-left sample of the current chroma block. The DM mode is identified by an index lumaMode. lumaMode thus denotes the value of the DM mode in the range [0-66] for VVC or in the range [0-34] for HEVC. The angular prediction modes, as Figure 1 shows, are defined from 45 degree to -135 degree angle in clockwise direction in sequential order. Thus mode 2 corresponds to 45 degree angle and mode 66 (34 in HEVC) corresponds to -135 degree angle.

Four default modes are also derived as follows from the DM mode. The same method applies whatever the number of modes NUM_LUMA_MODE is. For example, in HEVC, NUM_LUMA_MODE is equal to 35. offset is defined as NUM_LUMA_MODE - 6 and mod is defined as offset + 3. In the specific case where NUM_LUMA_MODE is equal to 67, offset = 61 and mode = 64. PLANAR_IDX is 0 and DC_IDX is 1.

In a first embodiment, at step S102, lumaMode is compared with DC_IDX. If lumaMode > DC_IDX (S103), i.e. if DM mode is an angular mode,

```
chroma_mode[0] = PLANAR_IDX
    chroma_mode[1] = DC_IDX
    chroma_mode[2] = ((lumaMode + offset) % mod) + 2;
    chroma_mode[3] = ((lumaMode - 1) % mod) + 2;
 Else, i.e. DM is either DC or PLANAR, (S104)
    chroma_mode[0] = !lumaMode
    chroma_mode[1] = VER_IDX
    chroma_mode[2] = HOR_IDX
    chroma_mode[3] = VDIA_IDX;
```

% is the modulo operator that computes the remainder of a division by Mod. chroma_mode[4] and chroma_mode[5] are LM and DM modes respectively. !lumaMode indicates the complementary value, that is, if lumaMode is DC (mode 1), !lumaMode is PLANAR (mode 0), else if lumaMode is PLANAR (mode 0), !lumaMode is DC (mode 1).

In the specific case where NUM_LUMA_MODE is equal to 67, offset = 61 and mode = 64. The equations for S103 of the first embodiment are rewritten as follows :

```
 If lumaMode > DC_IDX (S103), i.e. if DM mode is an angular mode,
    chroma_mode[0] = PLANAR_IDX
    chroma_mode[1] = DC_IDX
    chroma_mode[2] = ((lumaMode + 61) % 64) + 2;
    chroma_mode[3] = ((lumaMode - 1) % 64) + 2;
```

In the case where lumaMode > DC_IDX, chroma_mode[2] and chroma_mode[3] are located at ∓1 from lumaMode where the distance is computed over the set of directional modes [2-66] circularly as illustrated by Figure 1. chroma_mode[2] and chroma_mode[3] are equal to lumaMode +/- 1 in all cases except, in the case where lumaMode = 2 in which case chroma_mode[2]= 65 and in the case where lumaMode = 66 in which case chroma_mode[3]= 3. Indeed, the left adjacent of mode 2 is mode 65 and right adjacent of mode 66 is mode 3.

In a second embodiment, in the case where lumaMode > DC_IDX, chroma_mode[2] and chroma_mode[3] may be located at ∓2 from lumaMode. chroma_mode[2] and chroma_mode[3] are equal to lumaMode +/- 2 in all cases except, in the case where lumaMode = 2 in which case chroma_mode[2]= 64 and in the case where lumaMode = 66 in which case chroma_mode[3]= 4. Also in the case where lumaMode=3, chroma_mode[2] = 65, and in the case where lumaMode = 65, chroma_mode[3] = 3. The equations for S103 of the first embodiment are replaced by the following equations :

```
 If lumaMode > DC_IDX (S103), i.e. if DM mode is an angular mode,
    chroma_mode[0] = PLANAR_IDX
    chroma_mode[1] = DC_IDX
    chroma_mode[2] = ((lumaMode + offset - 1) % mod) + 2;
    chroma_mode[3] = ((lumaMode - 0) % mod) + 2;
```

S104 is not modified. In the second embodiment, the neighbors of the DM mode are selected by adding or subtracting 2 to lumaMode.

In the specific case where NUM_LUMA_MODE is equal to 67, offset = 61 and mode = 64. The equations for S103 of the second embodiment are rewritten as follows :

```
 If lumaMode > DC_IDX (S103), i.e. if DM mode is an angular mode,
 chroma_mode[0] = PLANAR_IDX
 chroma_mode[1] = DC_IDX
 chroma_mode[2] = ((lumaMode + 60) % 64) + 2;
 chroma_mode[3] = ((lumaMode - 0) % 64) + 2;
```

In a third embodiment that can be combined with the first and second embodiments, the default modes are used (SI04) in the case where lumaMode <= DC_IDX. Then lumaMode is replaced by VDIA_IDX. The equations for S104 of the first and/or second embodiment(s) are replaced by the following equations :

```
If lumaMode <= DC_IDX (S104)
    chroma_mode[0] = PLANAR_IDX
    chroma_mode[1] = VER_IDX
    chroma_mode[2] = HOR_IDX
    chroma_mode[3] = DC_IDX;
If lumaMode = PLANAR,
        chroma_mode[0] = VDIA_IDX
 Else
        chroma_mode[3] = VDIA_IDX;
```

In this embodiment, the VDIA mode may be the first one in the list (whem DM is PLANAR) or the 4th one (when DM is DC). The order will thus change the coding since the number of bits used to encode a mode may depend on its order. As indicated in table 5 below, chroma_mode[0] is encoded using 3 bits while chroma_mode[3] is encoded using 5 bits. In this third embodiment, S103 is identical to S103 in either the first or second embodiment.

The selected prediction mode in the candidate list can be signaled using the coding scheme mentioned in Table 4. Table 4 uses a fixed length coding of 4-bits for the four default modes. In a variant, the variable length coding scheme mentioned in Table 5 may be used to encoded/decode the 6 prediction modes instead of Table 4. The coding of DM and LM modes is the same as in Table 4. Chroma_mode[0] is encoded using 3 bits instead of 4 while chroma_mode[2] and chroma_mode[3]are encoded using 5 bits instead of 4.

Table 5: Proposed variable length chroma mode coding.

| Chroma intra prediction mode | Binarization |
|---|---|
| DM (chroma_mode[5]) | 0 |
| LM (chroma_mode[4] | 10 |
| chroma_mode[0] | 110 |
| chroma_mode[1] | 1110 |
| chroma_mode[2] | 11110 |
| chroma_mode[3] | 11111 |

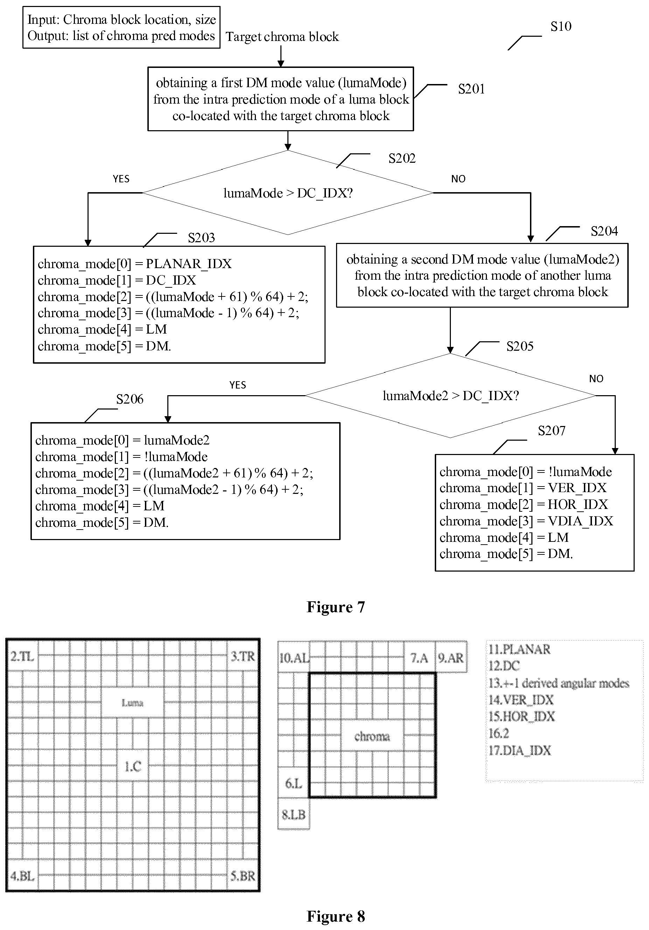

**Figure 7** depicts a flowchart of a method for obtaining a set/list of candidate intra prediction modes for a current chroma block according to one embodiment. In this embodiment, two DM modes are used to derive the candidate set of prediction modes. In the embodiment of Figure 6, the neighbor or adjacent modes of the DM mode are included provided the DM mode is angular. If the DM mode is not angular, that is, it is equal to either PLANAR or DC, then the original default modes (i.e. DC, PLANAR, VER, HOR) are used, but possibly in a different order. In the embodiment of Figure 7, a second DM mode is checked in the case where the first DM mode is not angular. If the first DM mode is the prediction mode of the luma block co-located with the top left position of the chroma block, then the second DM may the prediction mode of the luma block co-located with center location of the chroma block. Vice versa if the first DM mode is the prediction mode of the luma block co-located with the center position of the chroma block, then the second DM can be the prediction mode of the luma block co-located with the top left position of the chroma block. Let lumaMode2 denote the index of the second DM mode. Co-located luma block other than the one mentioned above may be used (e.g. the luma block co-located with the top-right position of the chroma block, luma block co-located with the bottom left position of the chroma block, luma block co-located with the bottom right position of the chroma block, etc).

Four modes are thus derived as follows from the first and second DM modes.

In a first embodiment, at step S202, lumaMode is compared with DC_IDX.

```
If lumaMode > DC_IDX (S203), i.e. if the first DM mode is an angular mode,
    chroma_mode[0] = PLANAR_IDX
    chroma_mode[1] = DC_IDX
    chroma_mode[2] = ((lumaMode + offset) % mod) + 2;
    chroma_mode[3] = ((lumaMode - 1) % mod) + 2;
 Else If lumaMode2 > DC_IDX (S206), i.e. if the second DM mode is an angular mode,
```

```
    chroma_mode[0] = lumaMode2
    chroma_mode[1] = ! lumaMode
    chroma_mode[2] = ((lumaMode2 + offset) % mod) + 2;
    chroma_mode[3] = ((lumaMode2 - 1) % mod) + 2 ;
Else (S207), i.e. neither first DM mode nor second DM mode is angular,
    Chroma_mode[0] = !lumaMode
    Chroma_mode[1] = VER_IDX
    Chroma_mode[2] = HOR_IDX
    Chroma_mode[3] = VDIA_IDX;
```

S203 is identical to S103 and S207 is identical to S104. chroma _mode[4] and chroma_mode[5] are LM and DM modes respectively. !lumaMode indicates the complementary value, that is, if lumaMode is DC (mode 1), !lumaMode is PLANAR (mode 0), else if lumaMode is PLANAR (mode 0), !lumaMode is DC (mode 1).

In the specific case where NUM_LUMA_MODE is equal to 67, offset = 61 and mode = 64. The equations for S203 of the first embodiment are rewritten as follows :

```
If lumaMode > DC_IDX (S203), i.e. if the first DM mode is an angular mode,
    chroma_mode[0] = PLANAR_IDX
    chroma_mode[1] = DC_IDX
    chroma_mode[2] = ((lumaMode + 61) % 64) + 2;
    chroma_mode[3] = ((lumaMode - 1) % 64) + 2;
and the equations for S206 of the first embodiment are rewritten as follows :
Else If lumaMode2 > DC_IDX (S206), i.e. if the second DM mode is an angular mode,
    chroma_mode[0] = lumaMode2
    chroma_mode[1] = ! lumaMode
    chroma_mode[2] = ((lumaMode2 + 61) % 64) + 2;
    chroma_mode[3] = ((lumaMode2 - 1) % 64) + 2 ;
```

In a second embodiment, in the case where lumaMode > DC_IDX, chroma_mode[2] and chroma_mode[3] may be located at $\mp 2$ from lumaMode and in the case where lumaMode2 > DC_IDX, chroma_mode[2] and chroma_mode[3] may be located at $\mp 2$ from lumaMode2. The equations for S203 of the first embodiment are replaced by the following equations :

```
If lumaMode > DC_IDX
 chroma_mode[0] = PLANAR_IDX
 chroma_mode[1] = DC_IDX
 chroma_mode[2] = ((lumaMode + offset - 1) % mod) + 2;
 chroma_mode[3] = ((lumaMode - 0) % mod) + 2;
Else If lumaMode2 > DC_IDX
 chroma_mode[0] = lumaMode2
 chroma_mode[1] = !lumaMode
 chroma_mode[2] = ((lumaMode2 + offset - 1) % mod) + 2;
 chroma_mode[3] = ((lumaMode2 - 0) % mod) + 2;
Else
 chroma_mode[0] = !lumaMode
 chroma_mode[1] = VER_IDX
 chroma_mode[2] = HOR_IDX
 chroma_mode[3] = VDIA_IDX;
```

S207 is not modified. In the second embodiment, the neighbors of the DM modes are selected by adding or subtracting 2 to lumaMode and lumaMode2.

In the specific case where NUM_LUMA_MODE is equal to 67, offset = 61 and mode = 64. The equations for S203 of the second embodiment are rewritten as follows :

```
If lumaMode > DC_IDX
 chroma_mode[0] = PLANAR_IDX
 chroma_mode[1] = DC_IDX
 chroma_mode[2] = ((lumaMode + 60) % 64) + 2;
 chroma_mode[3] = ((lumaMode - 0) % 64) + 2;
```

The equations for S206 of the second embodiment are rewritten as follows :

```
Else If lumaMode2 > DC_IDX
```

```
chroma_mode[0] = lumaMode2
chroma_mode[1] = !lumaMode
chroma_mode[2] = ((lumaMode2 + 60) % 64) + 2;
chroma_mode[3] = ((lumaMode2 - 0) % 64) + 2;
```

In a variant, the neighbors of the first DM mode can be selected by adding or subtracting 1 to lumaMode and the neighbors of the second DM mode can be selected by adding or subtracting 2 to lumaMode2. Vis versa, the neighbors of the first DM mode can be selected by adding or subtracting 2 to lumaMode and the neighbors of the second DM mode can be selected by adding or subtracting 1 to lumaMode2.

In case both the DM modes are non-angular, that is, they are either planar or DC, both the methods disclosed with respect to Figure 6 and 7 give the same set of default candidates (S104 and S207). The third embodiment disclosed with respect to the method of Figure 6 for S104 also applies for S207.

In the case where luma and chroma components uses the same coding tree partition, S204 can be modified so that the second DM mode is a prediction mode of a luma block co-located with a neighboring chroma block of the current chroma block. In other words, in slices or tiles where dual tree is not activated, the second DM mode can be derived from the prediction mode of any neighboring luma block. When dual tree is not activated, since there is only one co-located luma block, we can consider the left and the top neighbor blocks (with or without top-right, bottom-left and top-left neighbor blocks) for the second DM mode.

The selected chroma prediction modes in the candidate list can be signaled using the coding scheme mentioned for the method of Figure 6, i.er. using Tables 4 or 5.

The second DM mode can be derived from any of the co-loctaed luma blocks. As shown in **Figure 8**, many co-located luma blocks corresponding to the same chroma block can be used. The various co-located luma blocks can thus be scanned in a given order, e.g. in raster scan. The first prediction mode encountered that is angular is chosen as the second DM mode. From the flowchart in Figure 7, notice that, the second DM is obtained only when the default DM mode is either PLANAR or DC, i.e. when it is not angular.

Wide angle intra prediction (WAIP) refers to the usage of extra prediction directions beyond the usual 45 degree and -135 degree range used in intra prediction as illustrated by Figure 1. When a target block is rectangular, depending on the block shape, some regular prediction directions are replaced by equal number of wide angle directions in the opposite direction. Thus, when the block is flat, that is, its width is longer than its height, some prediction modes near (and including) mode 2 are replaced by equal number of wide angular modes beyond mode 66. Similarly, when the block is tall, that is, its height is longer than its width, some modes near (and including) mode 66 are replaced by equal number of wide angular modes beyond mode 2. In VTM 2.0.1, up to 10 wide angle directions can be used, which results in 20 wide angle directions beyond the usual 45 degree to -135 degree range for prediction directions. To support these wide angle directions, the reference array lengths are suitably defined.

In the previous embodiments, in the case where the following adjacent modes of an angular mode lumaMode are considered: chroma_mode[2] = ((lumaMode + 61) % 64) + 2 and chroma_mode[3] = ((lumaMode - 1) % 64) + 2, the left adjacent mode of mode 2 is mode 65 and the right adjacent mode of mode 65 is mode 2. Similarly, the right adjacent mode of mode 66 is mode 3. This is due to the fact that modes 2 and 66 are co-linear (i.e., they point in opposite directions of 45 degrees and -135 degrees) as depicted on Figure 1.

In the case of WAIP, modes 2 and 66 are no longer co-linear but are circularly adjacent. Therefore, for rectangular chroma blocks only, we can optionally do an endpoint adjustment where we make mode 2 and mode 66 adjacent (left adjacent of mode 2 is mode 66 and the right adjacent of mode 66 is mode 2) while deriving the neighbors. This adjustment can be used in combination with any of the previous embodiments disclosed.

In an embodiment, the option of using the proposed chroma modes is signaled in a slice/tile header indicating that all chroma CUs in the slice/ tile use these modes. This signaling can be used in combination with any of the previous embodiments disclosed.

In an embodiment, the option of using the proposed chroma modes is signaled in the Picture Parameters Set (PPS) indicating that all chroma CUs in a frame use these modes. This signaling can be used in combination with any of the previous embodiments disclosed.

In an embodiment, the option of using the proposed chroma modes is signaled in the Sequence Parameters Set (SPS) indicating that all chroma CUs in the sequence use these modes. This signaling can be used in combination with any of the previous embodiments disclosed.

The various embodiments improve the candidate set of prediction modes for the chroma blocks. Prediction efficiency is improved while maintaining the simplicity. The proposed chroma mode derivation aims to improve the chroma intra prediction accuracy while keeping the complexity at the same level as using the current method in VTM software. Since the DM mode has the highest probability, the idea here is to include other neighbor modes of the DM mode in the candidate list when the DM mode is angular.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures 9, 0 and 11 below provide some embodiments, but other embodiments are contemplated and the discussion of Figures 9, 0 and 11 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the intra prediction, entropy coding, and/or decoding modules (160, 360, 145, 330), of a video encoder 100 and decoder 200 as shown in Figure 9 and Figure 10. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, the number of intra prediction modes. The specific values are for example purposes and the aspects described are not limited to these specific values.

Figure 9 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 10 illustrates a block diagram of a video decoder 200. In the decoder 200, a bitstream is decoded by the decoder elements as described below. Video decoder 200 generally performs a decoding pass reciprocal to the encoding pass as described in Figure 9. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

Figure 11 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 10, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards. The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, determining a candidate set/list of prediction modes for chroma.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining a candidate set/list of prediction modes for chroma.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization (RD optimization). In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an intra prediction mode for a chroma block. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination. Further, embodiments can include one or more of the following features, devices, or aspects, alone or in any combination, across various claim categories and types:

- Inserting in the signaling syntax elements that enable the decoder to determine an intra prediction mode for a chroma block in a manner corresponding to that used by an encoder.

- Creating and/or transmitting and/or receiving and/or decoding a bitstream or signal that includes one or more of the described syntax elements, or variations thereof.

- A TV, set-top box, cell phone, tablet, or other electronic device that performs intra prediction for a chroma block according to any of the embodiments described.

- A TV, set-top box, cell phone, tablet, or other electronic device that performs intra prediction for a chroma block according to any of the embodiments described, and that displays (e.g. using a monitor, screen, or other type of display) a resulting image.

- A TV, set-top box, cell phone, tablet, or other electronic device that tunes (e.g. using a tuner) a channel to receive a signal including an encoded image, and performs intra prediction for a chroma block according to any of the embodiments described.

- A TV, set-top box, cell phone, tablet, or other electronic device that receives (e.g. using an antenna) a signal over the air that includes an encoded image, and performs intra prediction for a chroma block according to any of the embodiments described.

According to a general aspect of at least one embodiment, a method for decoding is presented, comprising:

selecting an intra prediction mode in a candidate set of prediction modes;
decoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, an apparatus for decoding is presented, comprising one or more processor(s) configured to perform:

selecting an intra prediction mode in a candidate set of prediction modes;
decoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, a method for encoding is presented, comprising:

selecting an intra prediction mode in a candidate set of prediction modes;
encoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to a general aspect of at least one embodiment, an apparatus for encoding is presented, comprising one or more processor(s) configured to perform:

selecting an intra prediction mode in a candidate set of prediction modes;
encoding a chroma block responsive to the selected intra prediction mode;
wherein the candidate set of prediction modes is obtained by:

obtaining a first intra prediction mode of a luma block co-located with the chroma block;
including in the candidate set of prediction modes the first intra prediction mode and, in the case where the first intra prediction mode is angular, further including at least one intra prediction mode whose angular direction is close to a current angular direction of the first intra prediction mode.

According to another general aspect of at least one embodiment, a bitstream is formatted to include signal generated according to the encoding methods described above.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

In one embodiment, including in the candidate set of prediction modes at least one intra prediction mode whose angular direction is close to the angular direction of the first intra prediction mode comprises including an intra prediction mode having an angular direction directly following or directly preceding the current angular direction.

In one embodiment, including in the candidate set of prediction modes at least one intra prediction mode whose angular direction is close to the angular direction of the first intra prediction mode comprises including an intra prediction mode having an angular direction right after the angular direction directly following the current angular direction or right before the angular direction directly preceding the current angular direction.

In one embodiment, in the case where the first intra prediction mode is angular, the method further comprises including in the candidate set a Planar mode, a DC mode and a Cross Component Linear Model mode.

In one embodiment, in the case where the first intra prediction mode is not angular, the method further comprises including in the candidate set, a Vertical prediction mode, an Horizontal prediction mode, a Cross Component Linear Model prediction mode, a Vertical Diagonal prediction mode and a Planar mode if the first intra prediction mode is a DC mode or a DC mode if the first intra prediction mode is a Planar mode.

In one embodiment, including in the candidate set of prediction modes the first intra prediction mode further comprises in the case where the first intra prediction mode is not angular:

> obtaining a second intra prediction mode of a luma block co-located with the chroma block;
> including in the candidate set of prediction modes the second intra prediction mode and, in the case where the second intra prediction mode is angular, further including at least one intra prediction mode whose angular direction is close to another current angular direction of the second intra prediction mode.

In one embodiment, including in the candidate set of prediction modes at least one intra prediction mode whose angular direction is close to the angular direction of the second intra prediction mode comprises including an intra prediction mode having an angular direction directly following or directly preceding the another current angular direction.

In one embodiment, including in the candidate set of prediction modes at least one intra prediction mode whose angular direction is close to the angular direction of the second intra prediction mode comprises including an intra prediction mode having an angular direction right after the angular direction directly following the another current angular direction or right before the angular direction preceding the another current angular direction.

In one embodiment, the luma block co-located with the chroma block is co-located with one of the following samples of the chroma block: the center sample, the top left sample, the top right sample, the bottom left sample and the bottom right sample.

In one embodiment, the index of the selected mode is encoded on 2 bits in the case where the selected mode is equal to the first intra prediction mode or to the Cross Component Linear Model prediction mode are encoded on, on 3 bits in the case where the selected mode is equal to the next prediction mode of the candidate list, on 4 bits in the case where it is equal to the following next prediction mode of the candidate list, and on five bits otherwise.

**Claims**

1. A decoding method comprising:

> selecting an intra prediction mode in a candidate set of prediction modes;
> decoding a chroma block responsive to said selected intra prediction mode;
> wherein said candidate set of prediction modes is obtained by:

>> obtaining a first intra prediction mode of a luma block co-located with said chroma block;

including in said candidate set of prediction modes the first intra prediction mode and, in the case where said first intra prediction mode is angular, further including at least one intra prediction mode whose angular direction is close to a current angular direction of said first intra prediction mode.

2. The method of claim 1, wherein including in said candidate set of prediction modes at least one intra prediction mode whose angular direction is close to the angular direction of said first intra prediction mode comprises including an intra prediction mode having an angular direction directly following or directly preceding the current angular direction.

3. The method of claim 1, wherein including in said candidate set of prediction modes at least one intra prediction mode whose angular direction is close to the angular direction of said first intra prediction mode comprises including an intra prediction mode having an angular direction right after the angular direction directly following the current angular direction or right before the angular direction directly preceding the current angular direction.

4. The method of claim 2 or 3, wherein in the case where said first intra prediction mode is angular, said method further comprises including in said candidate set a Planar mode, a DC mode and a Cross Component Linear Model mode.

5. The method of any one of claims 2-4, wherein in the case where said first intra prediction mode is not angular, said method further comprises including in said candidate set, a Vertical prediction mode, an Horizontal prediction mode, a Cross Component Linear Model prediction mode, a Vertical Diagonal prediction mode and a Planar mode if said first intra prediction mode is a DC mode or a DC mode if said first intra prediction mode is a Planar mode.

6. The method of any one of claims 1-3, wherein including in said candidate set of prediction modes the first intra prediction mode further comprises in the case where said first intra prediction mode is not angular:

   obtaining a second intra prediction mode of a luma block co-located with said chroma block;
   including in said candidate set of prediction modes the second intra prediction mode and, in the case where said second intra prediction mode is angular, further including at least one intra prediction mode whose angular direction is close to another current angular direction of said second intra prediction mode.

7. The method of claim 4, wherein including in said candidate set of prediction modes at least one intra prediction mode whose angular direction is close to the angular direction of said second intra prediction mode comprises including an intra prediction mode having an angular direction directly following or directly preceding the another current angular direction.

8. The method of claim 4, wherein including in said candidate set of prediction modes at least one intra prediction mode whose angular direction is close to the angular direction of said second intra prediction mode comprises including an intra prediction mode having an angular direction right after the angular direction directly following the another current angular direction or right before the angular direction preceding the another current angular direction.

9. The method of any one of claims 1-6, wherein the luma block co-located with the chroma block is co-located with one of the following samples of the chroma block: the center sample, the top left sample, the top right sample, the bottom left sample and the bottom right sample.

10. An encoding method comprising:

    selecting an intra prediction mode in a candidate set of prediction modes;
    encoding a chroma block responsive to said selected intra prediction mode;
    wherein said candidate set of prediction modes is obtained by:

       obtaining a first intra prediction mode of a luma block co-located with said chroma block;
       including in said candidate set of prediction modes the first intra prediction mode and, in the case where said first intra prediction mode is angular, further including at least one intra prediction mode whose angular direction is close to a current angular direction of said first intra prediction mode.

11. A decoding apparatus comprising at least one processor configured to perform :

    selecting an intra prediction mode in a candidate set of prediction modes;

decoding a chroma block responsive to said selected intra prediction mode;
wherein said candidate set of prediction modes is obtained by:

obtaining a first intra prediction mode of a luma block co-located with said chroma block;
including in said candidate set of prediction modes the first intra prediction mode and, in the case where said first intra prediction mode is angular, further including at least one intra prediction mode whose angular direction is close to a current angular direction of said first intra prediction mode.

12. An encoding apparatus comprising at least one processor configured to perform:

selecting an intra prediction mode in a candidate set of prediction modes;
encoding a chroma block responsive to said selected intra prediction mode;
wherein said candidate set of prediction modes is obtained by:

obtaining a first intra prediction mode of a luma block co-located with said chroma block;
including in said candidate set of prediction modes the first intra prediction mode and, in the case where said first intra prediction mode is angular, further including at least one intra prediction mode whose angular direction is close to a current angular direction of said first intra prediction mode.

**Figure 1**

0: Planar
1: DC

**Figure 2**

chroma partition

■ DM Position

**Figure 3**

Bitstream for a target
chroma block

S10

obtaining a first intra prediction mode of a
luma block co-located with a target chroma
block

S12

Is first intra prediction mode angular ?

S14

YES

NO

adding in the candidate set the first intra
prediction mode and at least one intra
prediction mode whose angular direction is
close to angular direction of the first intra
prediction mode

S16

adding in the candidate set the first
intra prediction mode

S18

selecting an intra prediction mode in the candidate set

S20

decoding the chroma block responsive to the selected intra
prediction mode

S30

**Figure 4**

Target chroma block ⟍ S10

obtaining a first intra prediction mode of a
luma block co-located with the chroma block ⟍ S12

Is first intra prediction mode angular ? ⟍ S14

YES        NO

adding in the candidate set the first intra
prediction mode and at least one intra
prediction mode whose angular direction is
close to angular direction of the first intra
prediction mode ⟍ S16

adding in the candidate set the first
intra prediction mode ⟍ S18

selecting an intra prediction mode in the candidate set ⟍ S40

encoding the chroma block responsive to the selected intra
prediction mode ⟍ S50

**Figure 5**

Input: Chroma block location, size
Output: list of chroma pred modes

Target chroma block            S10

obtaining DM mode value (lumaMode) from
the intra prediction mode of a luma block co-
located with the target chroma block ⟍ S101

lumaMode > DC_IDX? ⟍ S102

YES        NO

chroma_mode[0] = PLANAR_IDX
chroma_mode[1] = DC_IDX
chroma_mode[2] = ((lumaMode + 61) % 64) + 2;
chroma_mode[3] = ((lumaMode - 1) % 64) + 2;
chroma_mode[4] = LM
chroma_mode[5] = DM ⟍ S103

chroma_mode[0] = !lumaMode
chroma_mode[1] = VER_IDX
chroma_mode[2] = HOR_IDX
chroma_mode[3] = VDIA_IDX
chroma_mode[4] = LM
chroma_mode[5] = DM ⟍ S104

**Figure 6**

Input: Chroma block location, size
Output: list of chroma pred modes | Target chroma block

S10

obtaining a first DM mode value (lumaMode)
from the intra prediction mode of a luma block
co-located with the target chroma block — S201

S202

YES — lumaMode > DC_IDX? — NO

S203

chroma_mode[0] = PLANAR_IDX
chroma_mode[1] = DC_IDX
chroma_mode[2] = ((lumaMode + 61) % 64) + 2;
chroma_mode[3] = ((lumaMode - 1) % 64) + 2;
chroma_mode[4] = LM
chroma_mode[5] = DM.

S204

obtaining a second DM mode value (lumaMode2)
from the intra prediction mode of another luma
block co-located with the target chroma block

S205

YES — lumaMode2 > DC_IDX? — NO

S206

chroma_mode[0] = lumaMode2
chroma_mode[1] = !lumaMode
chroma_mode[2] = ((lumaMode2 + 61) % 64) + 2;
chroma_mode[3] = ((lumaMode2 - 1) % 64) + 2;
chroma_mode[4] = LM
chroma_mode[5] = DM.

S207

chroma_mode[0] = !lumaMode
chroma_mode[1] = VER_IDX
chroma_mode[2] = HOR_IDX
chroma_mode[3] = VDIA_IDX
chroma_mode[4] = LM
chroma_mode[5] = DM.

**Figure 7**

2.TL      3.TR
Luma
1.C
4.BL      5.BR

10.AL     7.A   9.AR
chroma
6.L
8.LB

11.PLANAR
12.DC
13.+-1 derived angular modes
14.VER_IDX
15.HOR_IDX
16.2
17.DIA_IDX

**Figure 8**

Figure 9

**200**

**Figure 10**

**1000**

**Figure 11**

Europäisches
Patentamt

European
Patent Office

Office européen
des brevets

# EUROPEAN SEARCH REPORT

Application Number

EP 18 30 6500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG L ET AL: "Multiple Direct Modes for chroma intra coding", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0111, 6 October 2016 (2016-10-06), XP030150356, * abstract; figures 2, 3 * * paragraphs [0001] - [0003] * | 1,2,4-7, 9-12 | INV. H04N19/11 H04N19/186 H04N19/176 |
| X | HAN Y ET AL: "Decoder-Side Direct Mode Prediction", 5. JVET MEETING; 12-1-2017 - 20-1-2017; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-E0027, 3 January 2017 (2017-01-03), XP030150489, * paragraphs [0001], [0002] * * abstract * | 1,10-12 | |
| X | VAN DER AUWERA (QUALCOMM) G ET AL: "Description of Core Experiment 3 (CE3): Intra Prediction and Mode Coding", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L1023 4 November 2018 (2018-11-04), XP030198606, Retrieved from the Internet: URL:http://phenix.int-evry.fr/jvet/doc_end _user/documents/12_Macao/wg11/JVET-L1023-v 2.zip JVET-L1023_v2.docx [retrieved on 2018-11-04] * paragraph [3.3.3.4] * | 1-3, 10-12 | TECHNICAL FIELDS SEARCHED (IPC) H04N |

-/--

The present search report has been drawn up for all claims

| Place of search | Date of completion of the search | Examiner |
|---|---|---|
| Munich | 19 February 2019 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 18 30 6500

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN J ET AL: "JVET-G1001- Algorithm description of Joint Exploration Test Model 7 (JEM7)", JOINT VIDEO EXPLORATION TEAM (JVET)OF ITU-T SG 16 WP 3 AND ISO/IEC JTC 1/SC 29/WG 11, 7TH MEETING, 13-7-2017 - 21-7-2017; TORINO , 19 August 2017 (2017-08-19), pages i-iv, 1, XP030150980, Retrieved from the Internet: URL:http://phenix.int-evry.fr/jvet/doc_end _user/documents/7_Torino/wg11/JVET-G0001-v 1.zip * the whole document * ----- | 1-12 | |
| A | US 2018/205946 A1 (ZHANG LI [US] ET AL) 19 July 2018 (2018-07-19) * the whole document * ----- | 1-12 | |

TECHNICAL FIELDS
SEARCHED       (IPC)

The present search report has been drawn up for all claims

| Place of search | Date of completion of the search | Examiner |
|---|---|---|
| Munich | 19 February 2019 | Cakiroglu Garton, S |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

page 2 of 2

## ANNEX TO THE EUROPEAN SEARCH REPORT
## ON EUROPEAN PATENT APPLICATION NO.

EP 18 30 6500

This annex lists the patent family members relating to the patent documents cited in  the above-mentioned European search report.
The members are as contained in the European Patent Office EDP file on
The European Patent Office is in no way liable for these particulars which are merely given for the purpose of information.

19-02-2019

| Patent document cited in search report | Publication date | Patent family member(s) | Publication date |
|---|---|---|---|
| US 2018205946 A1 | 19-07-2018 | US 2018205946 A1<br>WO 2018132710 A1 | 19-07-2018<br>19-07-2018 |

EPO FORM P0459

For more details about this annex : see Official Journal of the European Patent Office, No. 12/82